# EUROPÄISCHE PATENTSCHRIFT

(11) **EP 0 388 783 B1**
(45) Veröffentlichungstag und Bekanntmachung des Hinweises auf die Patenterteilung: **25.05.1994**
(21) Anmeldenummer: 90104871.0
(22) Anmeldetag: 15.03.1990
(51) Int. Cl.: B23B 29/04, B23B 27/16

(54) **Schneidwerkzeug für die spanabhebende Bearbeitung**
Cutting tool for chip cutting
Outil de coupe pour l'usinage à enlèvement de copeaux

(30) Priorität: 21.03.1989 DE 3909238
(43) Veröffentlichungstag der Anmeldung: 26.09.1990
(73) Patentinhaber: CERASIV GmbH INNOVATIVES KERAMIK-ENGINEERING, D-73207 Plochingen (DE)
(72) Erfinder: Eder, Otto, D-7316 Köngen (DE); Koppitz, Dieter, D-7440 Nürtingen (DE)
(74) Vertreter: Schulz, Wilfried, Dipl.-Ing.

(56) Entgegenhaltungen:
- FR-A- 2 210 123
- FR-A- 2 565 865
- US-A- 3 703 755
- US-A- 3 711 216

## Beschreibung

Die Erfindung betrifft ein Schneidwerkzeug für die spanabhebende Bearbeitung nach dem Oberbegriff des Anspruchs 1, siehe US-A-3 711 216.

Aus der US-PS 2,693,019 ist bekannt, Stellschrauben direkt auf die Schneidplatte oder bzw. und auf die Spannpratze einwirken zu lassen, um dadurch Schleifarbeit zu vermeiden und die Lebensdauer des Schneideinsatzes zu erhöhen.

Aus der US-PS 3, 703, 755 ist ein Schneidwerkzeug bekannt, das über einen verschiebbaren Einsatz in der Ausnehmung des Halters verfügt. Auch hierbei ist vorgesehen, eine nachgeschliffene Schneidplatte einzusetzen und diese durch eine verschiebbare Anlage in die ursprüngliche Position der ungeschliffenen Schleifplatte einzurücken.

Aus der US-PS 4,066,376 ist ein Bohrwerkzeug bekannt, das eine durch einen Kreisbogen begrenzte Aufnahme für die Schneidplatte aufweist. Diese Aufnahme kann in bestimmten vorgegebenen Positionen durch das Einbringen von Stiften fixiert werden.

Aus der DE-PS 21 52 105 ist das Justieren eines Stahlhalters in seiner Spannvorrichtung bekannt.

Im Zuge der Automatisierung von Zerspanungsvorgängen und der Einhaltung immer feinerer Toleranzen ist es erforderlich, die Schneidplatten im Halter zu justieren, insbesondere, wenn es sich bei der Werkzeugmaschine um ein Werkzeugwechselsystem handelt, dessen Lage durch eine Kupplung definiert ist und nicht verändert werden kann, d. h., daß automatisch die Werkzeuge gewechselt werden, ohne daß der Bearbeitungsvorgang als solcher unterbrochen wird. Die Feineinstellung von Schneidstählen ist bisher ein sehr zeitaufwendiges Verfahren, da sowohl die Schneidplatte als auch die Ausnehmung, in der die Schneidplatte im Kopf des Stahlhalters ruht, herstellungsbedingt Toleranzen aufweist. Bei Werkzeugen mit Wechselkupplung ist bisher ein Ausrichten nicht möglich.

Aufgabe der vorliegenden Erfindung ist daher, eine Möglichkeit zu schaffen, diese Toleranzen durch Einstellvorrichtungen auszugleichen und somit ohne aufwendige Nachbearbeitung die Möglichkeit zu schaffen, die geforderten hohen Maßgenauigkeiten einzuhalten.

Bei einem Schneidwerkzeug gemäß Oberbegriff wird diese Aufgabe durch die Merkmale des kenngeichneden Teils des Anspruchs 1 gelöst.

Der Justiersatz ist dabei in eine Ausnehmung des an der Klemmeinheit angeordneten Schneidkopfes eingesetzt. Der Justiersatz besteht aus einer Justierbacke und Verstellmitteln. Die Verstellmittel sind in einer in die Ausnehmung des Schneidkopfes hineinragenden Nut angeordnet, die mindestens zum Teil eine Seitenwange der Ausnehmung begrenzt. Abhängig von der Art der verwandten Schneidplatte und der Anzahl der Einzugstellen der Funktionsmaße des Schneidkopfes, d. h. Länge, Seitenmaß und Höhenmaß, werden bis zu drei Justiersätze im Schneidkopf pro Schneidplatte angeordnet, ersetzen also im wesentlichen eine oder zwei Seitenwangen der Ausnehmung. Dabei stehen eine bzw. zwei Justierbacken mit der Seitenfläche einer Schneidplatte in Berührung, wobei die Justierbacken durch eine T-Führung oder eine Schwalbenschwanzführung mit dem Schneidkopf verbunden sind. Diese Verbindung weist ein gewisses Spiel auf, so daß sich die Justierbacke in ihrem oberen Bereich schließend an die Schneidplatte anlegen kann. Der untere Bereich der Justierbacke, also der Bereich, in dem die T- oder Schwalbenschwanzführung angeordnet ist, wird zur Ausnehmung hin durch die Stützplatte abgedeckt. Daraus ergibt sich automatisch der Vorteil, daß die Justierbacke unverlierbar im Schneidkopf angeordnet ist, da die Stützplatte beim Wechsel der Schneidplatte nicht gelöst wird.

Die Justierbacke könnte im allgemeinen durch eine Feingewindeschraube verstellt werden, jedoch sind die Zugangsmöglichkeiten zu dieser Schraube im Schneidkopf sehr begrenzt, so daß sich eher die Verstellung durch einen Exzenter anbietet, der hinter der Justierbacke angeordnet werden kann. Besonders bevorzugt wird jedoch eine Ausführungsform, bei der die Verstellmittel aus einer Kombination von Keil und Verstellschraube bestehen, wobei der Keil mit einer durchgehenden Feingewindebohrung versehen ist und die Verstellschraube zusätzlich zu dem Feingewinde ein Normalgewinde aufweist, das in den Schneidkopf hineingreift. Beim Betätigen der Verstellschraube wird dadurch der Keil nur um die Differenz der Steigungen der beiden Gewinde abgesenkt, was eine sehr feinfühlige Einstellung ermöglicht, d. h., daß in Verbindung mit dem Winkel des Keiles, der auf eine entsprechende rückseitig angeordnete Keilfläche der Justierbacke wirkt, eine minimale Verschiebung der Justierbacke möglich ist und damit eine äußerst feinfühlige Einstellung der Schneidplatte erreicht werden kann.
Weitere vorteilhafte Ausführungsformen sind in den Unteransprüchen enthalten.

Die Erfindung wird nachstehend anhand der Zeichnungen beschrieben.
- Fig. 1: zeigt einen montierten Schneidkopf in Draufsicht mit zugehörigem Grundhalter,

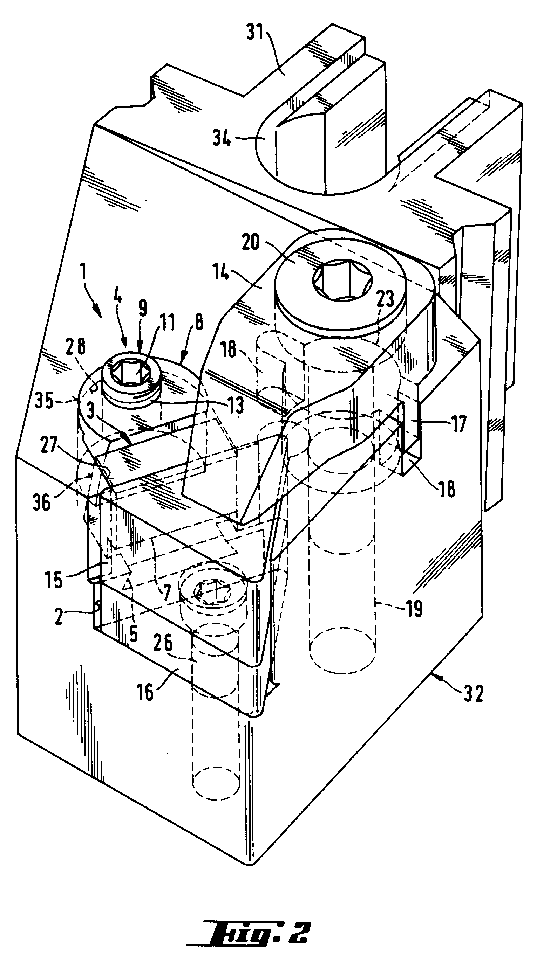

- Fig. 2: zeigt in perspektivischer Darstellung einen Schneidkopf im montierten Zustand,
- Fig. 3: den gleichen Schneidkopf als Explosionsschaubild,

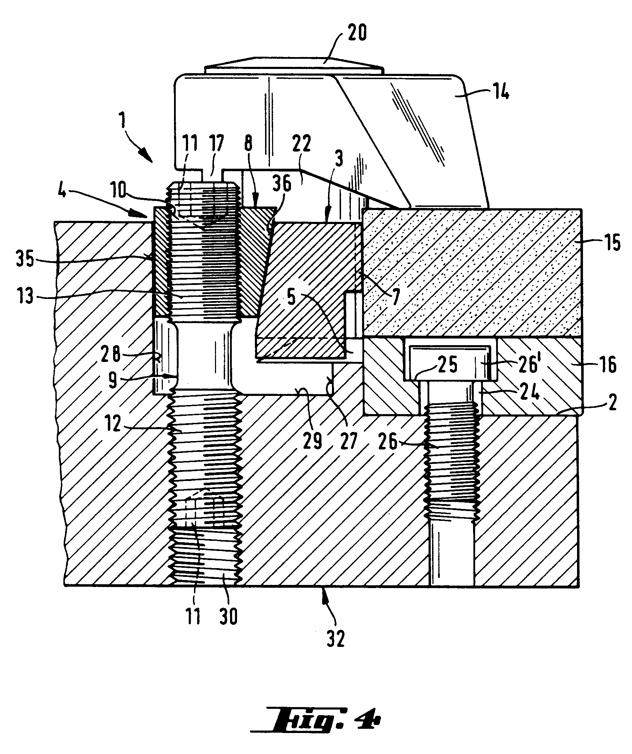

- Fig. 4: zeigt einen Schnitt gemäß der Linie IV-IV in Fig. 1
- Fig. 5: eine weitere Ausführungsform mit einer quadratischen Schneidplatte in Aufsicht,
- Fig. 6: zeigt einen Schneidkopf nach Fig. 5 perspektivisch, teilweise als Explosionsschaubild.

Die Klemmeinheit (31) des Schneidkopfes (32) ist in ihrem rückwärtigen Bereich mit einer Kupplungsbohrung (34) versehen, in die eine Zugstange (33) eingreift. Die Schneidplatte (15) liegt auf der Stützplatte (16) auf und wird durch die Spannpratze (14) in ihrer Position gehalten. Die Spannpratze (14) ist mit Flügeln (17) versehen, die in die Flügelnuten (18), die sich beidseitig der Spanngewindebohrung (19) erstrecken, eingreifen.

Die Spannpratze (14) wird von einer Spannschraube (20) durchgriffen, die mit einem Federring (21) an der Spannpratze (14) unverlierbar befestigt ist. Der Zylinderansatz (22) der Spannpratze (14) greift in das Sackloch (23) des Schneidkopfes (32) ein, wenn die Spannschraube (20) in der Spanngewindebohrung (19) angezogen wird.

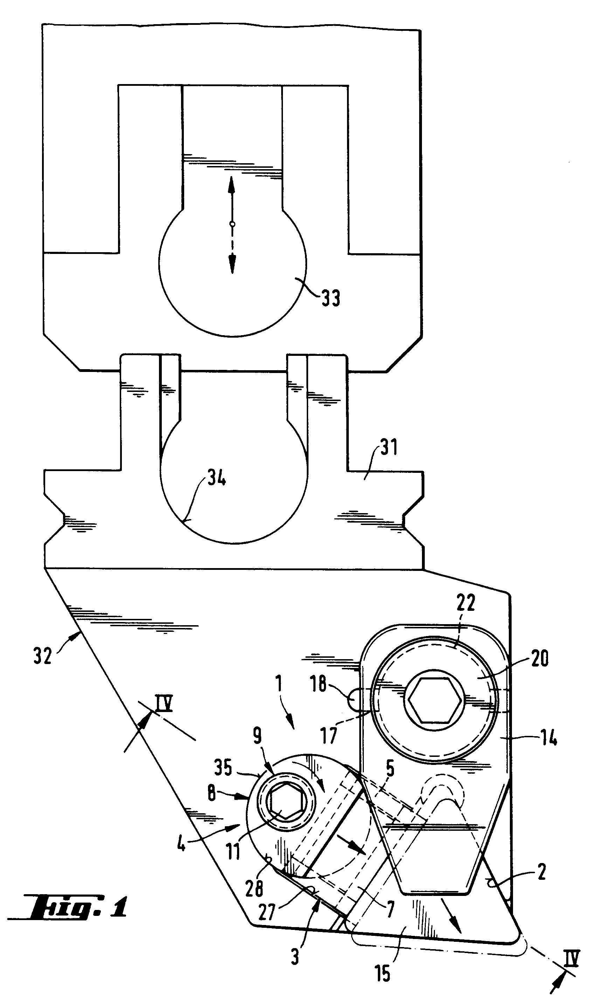

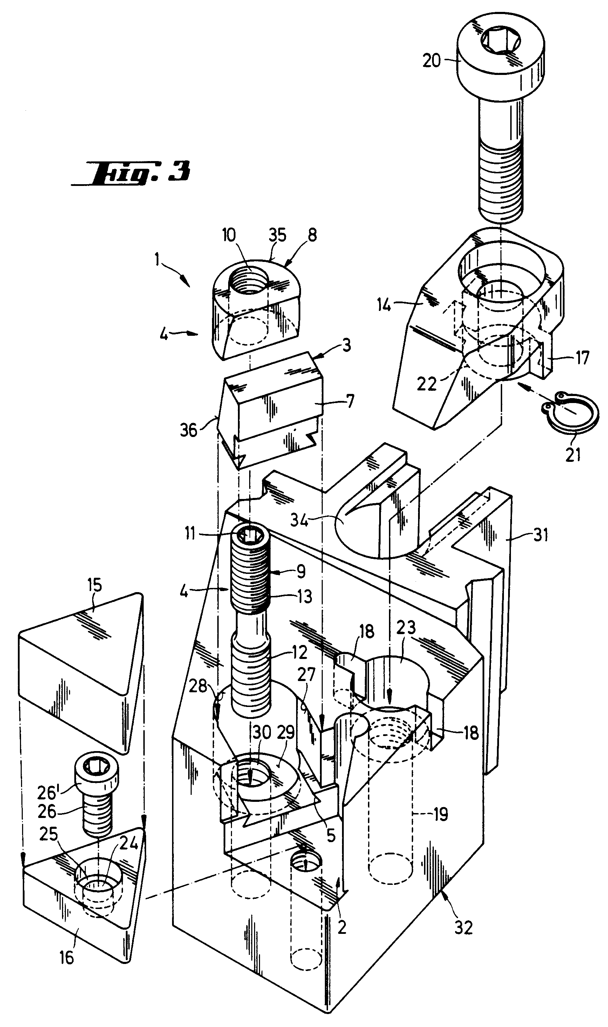

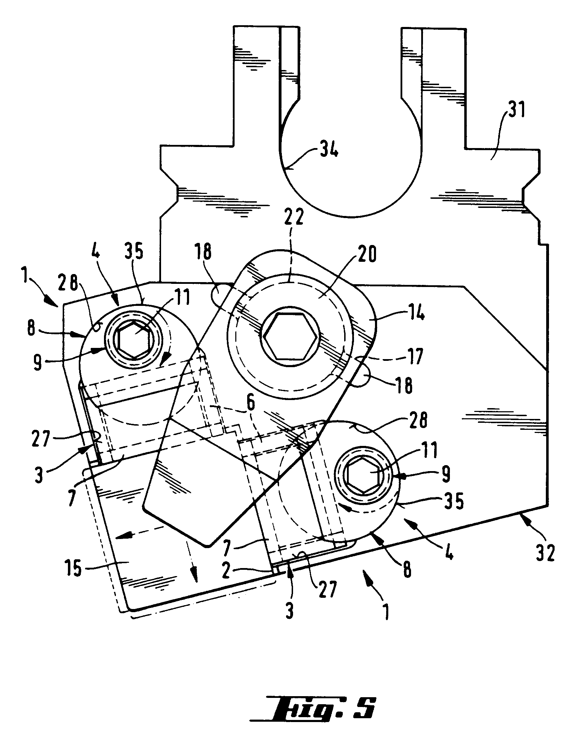

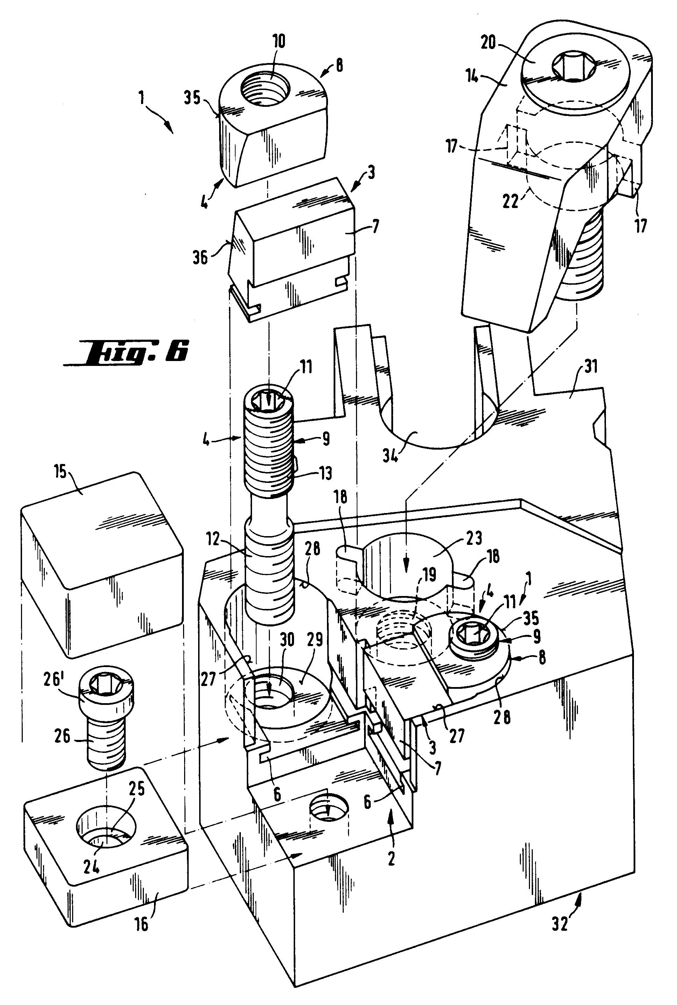

Die Stützplatte (16) ist mit einer Durchgangsbohrung (24) versehen, die einen Ansatz (25) aufweist. Die Halteschraube (26) ruht mit ihrem Zylinderkopf (26') auf dem Ansatz (25) und hält dadurch die Stützplatte (16) in der Ausnehmung (2) des Schneidkopfes (32). Von der Ausnehmung (2) erstreckt sich eine - Figur 1 - bzw. erstrecken sich zwei Nuten (27) - Figur 5 - in den Schneidkopf (32). Sie werden rückseitig durch eine Bogenfläche (28) begrenzt und weisen in ihrem Boden (29) eine Gewindebohrung (30) auf, in die das Grobgewinde (12) der Verstellschraube (9) eingreift. Die Seitenwangen der Nut (27) sind im unteren Bereich als Schwalbenschwanzführung (5) - Figur 3 - bzw. als T-Führung (6) - Figur 6 - ausgeführt.

Zur Montage des Justiereinsatzes (1) wird zunächst der Keil (8), welcher eine Feingewindebohrung (10) aufweist, auf die Verstellschraube (9) aufgeschraubt, so daß ein Teil des Feingewindes (13) über den Keil (8) hinaussteht. Die Verstellschraube (9) wird dann mit dem Gewinde (12) in die Gewindebohrung so eingeschraubt, womit das Verstellmittel (4) gebildet ist. Dabei wird der Keil (8) an den Seitenwangen der Nut (27) geführt und liegt mit seinem rückwärtigen Teilzylinderfläche (35) an der Hohlzylinderfläche (28) der Nut (27) an. Die Justierbacke (3) ist mit ihrer Keilfläche (36) gegen den Keil (8) ausgerichtet und in der Schwalbenschwanzführung (5) bzw. der T-Führung (6) geführt. Sie trägt einen Ansatz (7), der mit dem oberen Bereich einer Seitenfläche der Schneidplatte (15) in Eingriff steht. Wird nach Einlegen der Schneidplatte (15) in die Ausnehmung (2) die Spannschraube (20) der Spannpratze (14) leicht angezogen, so kann im Anschluß daran durch Betätigen der Verstellschraube (9) die Schneidplatte (15) über die Justierbacke (3) feinfühlig nach außen verstellt werden. Da die Innensechskante (11) in der Verstellschraube (9) sowohl auf der Feingewindeseite (13) als auch auf der Grobgewindeseite (12) angeordnet sind, ist die Verstellung der Schneidplatte (15) sowohl von oben her, also von der Seite, auf der die Spannpratze (14) sitzt, als auch von unten her möglich.

## Patentansprüche

1. Schneidwerkzeug für die spanabhebende Bearbeitung, insbesondere für Werkzeugwechselsysteme, mit einem an einer Klemmeinheit (31) angeordneten Schneidkopf (32) mit darin angeordneter, von einer Spannpratze (14) gehaltener Schneidplatte (15), mit einem sich im Schneidkopf (32) abstützenden, an einer Anlagefläche der Schneidplatte (15) angreifendem Justiersatz (1), wobei der Justiersatz (1) in eine Ausnehmung (2) des an der Klemmeinheit (31) angeordneten Schneidkopfes (32) eingesetzt ist und der Justiersatz (1) aus einer Justierbacke (3) und Verstellmitteln (4) besteht, **dadurch gekennzeichnet,** daß die Justierbacke (3) in einer Nut (27) flächennormal zur Anlagefläche der Schneidplatte (15) geführt ist und eine Abschrägung aufweist, die von einem mit einer durchgehenden Feingewindebohrung versehenen Keil (8) kraftbeaufschlagt ist, und einer Verstellschraube (9) zur Verstellung des Keils (8), die als Gewindestift mit Doppelgewinde ausgeführt ist, wobei ein Gewinde im Schneidkopf (32) und das andere Gewinde in der Feingewindebohrung des Keils (8) angeordnet ist.

2. Schneidwerkzeug nach Anspruch 1, **dadurch gekennzeichnet,** daß die Führung der Justierbacke (3) als Schwalbenschwanzführung (5) ausgestaltet ist.

3. Schneidwerkzeug nach Anspruch 1, **dadurch gekennzeichnet,** daß die Führung der Justierbacke (3) als T-Führung (6) ausgestaltet ist.

4. Schneidwerkzeug nach einem der Ansprüche 1 bis 3, **dadurch gekennzeichnet,** daß die Justierbacke (3) im oberen zur Schneidplatte (15) gewandten Bereich einen Ansatz (7) aufweist.

5. Schneidwerkzeug nach einem der Ansprüche 1 bis 4, **dadurch gekennzeichnet,** daß die Justierbacke (3) im rückwärtigen Bereich abgeschrägt ist.

6. Schneidwerkzeug nach einem der Ansprüche 1 bis 5, **dadurch gekennzeichnet,** daß der Keil (8) im rückwärtigen Bereich eine Teilzylinderfläche (35) aufweist.

7. Schneidwerkzeug nach einem der Ansprüche 1 bis 6, **dadurch gekennzeichnet,** daß die Verstellschraube (9) beidseitig mit einem Innensechskant (11) versehen ist.

8. Schneidwerkzeug nach einem der Ansprüche 1 bis 7, **dadurch gekennzeichnet,** daß der Gewindestift einseitig mit Grob- (12) und gegenseitig mit Feingewinde (13) versehen ist.

## Claims

1. Cutting tool for machining, especially for tool change systems, having a cutting head (32) which is arranged on a clamping unit (31) and has arranged in it a cutting plate (15) held by a clamping claw (14), having an adjusting unit (1) supporting itself in the cutting head (32) and engaging with a bearing surface of the cutting plate (15), the adjusting unit (1) being inserted into a recess (2) of the cutting head (32) arranged on the clamping unit (31) and the adjusting unit (1) consisting of an adjusting jaw (3) and displacement means (4), characterised in that the adjusting jaw (3) is guided in a groove (27) perpendicular to the bearing surface of the cutting plate (15) and has a chamfer which is subjected to force by a wedge (8) provided with a fine-pitch threaded through bore, and a displacement screw (9) for displacement of the wedge (8), which screw is in the form of a threaded pin with double thread, one thread being arranged in the cutting head (32) and the other thread in the fine-pitch threaded bore of the wedge (8).

2. Cutting tool according to Claim 1, characterised in that the guide means for the adjusting jaw (3) is in the form of a dovetail guide (5).

3. Cutting tool according to Claim 1, characterised in that the guide means for the adjusting jaw (3) is in the form of a T-guide (6).

4. Cutting tool according to one of Claims 1 to 3, characterised in that the adjusting jaw (3) has a projection (7) in the upper region facing towards the cutting plate (15).

5. Cutting tool according to one of Claims 1 to 4, characterised in that the adjusting jaw (3) is chamfered in the rearward region.

6. Cutting tool according to one of Claims 1 to 5, characterised in that the wedge (8) has in the rearward region a surface (35) in the shape of part of a cylinder.

7. Cutting tool according to one of Claims 1 to 6, characterised in that the displacement screw (9) is provided at both ends with a hexagonal socket (11).

8. Cutting tool according to one of Claims 1 to 7, characterised in that the threaded pin is provided at one end with a coarse-pitch thread (12) and at the opposite end with a fine-pitch thread (13).

## Revendications

1. Outil de coupe pour l'usinage par enlèvement de copeaux, notamment pour des systèmes à changement d'outil, comportant une tête d'usinage (32) qui est montée sur un bloc de fixation (31) et porte une plaquette de coupe (15) tenue par une griffe de serrage 14, un ensemble de réglage (1) qui prend appui sur la tête d'usinage (32) et agit sur la surface d'appui de la plaquette de coupe (15), l'ensemble de réglage (1) étant logé dans un évidement (2) de la tête d'usinage (32) montée sur le bloc de fixation (31) et l'ensemble de réglage (1) étant constitué d'une cale de réglage (3) et de moyens de réglage (4) caractérisé par le fait que la cale de réglage (3) est guidée dans une rainure (27) perpendiculaire à la surface d'appui de la plaquette de coupe (15) et comporte une surface inclinée qui sollicitée par un coin (8) pourvu d'un trou débouchant fileté fin et d'une vis (9) de réglage dudit coin (8) qui est agencée sous forme de vis sans tête à filetage double, un filetage s'engageant dans la tête d'usinage (32) et l'autre filetage dans le trou fileté fin du coin (8).

2. Outil de coupe selon la revendication 1, caractérisé par le fait que le moyen de guidage de la cale de réglage (3) est agencé sous la forme de glissière en queue d'aronde (5).

3. Outil de coupe selon la revendication 1, caractérisé par le fait que le moyen de guidage de la cale de réglage (3) est agencé sous forme de glissière en T (6).

4. Outil de coupe selon les revendications 1 à 3, caractérisé par le fait que la cale de réglage (3) présente, dans sa partie supérieure tournée vers la plaquette de coupe (15) un talon (7).

5. Outil de coupe selon l'une des revendications 1 à 4, caractérisé par le fait que la cale de réglage (3), dans sa partie arrière, est inclinée.

6. Outil de coupe selon l'une des revendications 1 à 5, caractérisé par le fait que le coin (8) présente dans sa partie arrière une surface (35) partiellement cylindrique.

7. Outil de coupe selon l'une des revendications 1 à 6, caractérisé par le fait que la vis de réglage (9) est pourvue à ses deux extrémités d'une empreinte en creux (11) à six pans.

8. Outil de coupe selon l'une des revendications 1 à 7, caractérisé par le fait que la vis sans tête est pourvue d'un côté d'un filetage gros (12) et à son extrémité opposée d'un filetage fin (13).
